# EUROPEAN PATENT APPLICATION

(11) **EP 4 571 636 A1**
(43) Date of publication of application: **18.06.2025**
(21) Application number: 23852350.0
(22) Date of filing: 24.07.2023
(51) Int. Cl.: G06T 7/00, G06T 7/60

(54) **OBJECT CLASSIFICATION DEVICE, OBJECT CLASSIFICATION METHOD AND OBJECT CLASSIFICATION SYSTEM**

(30) Priority: 12.08.2022 JP 2022128897
(71) Applicant: HITACHI HIGH-TECH CORPORATION, Tokyo 105-6409 (JP)
(72) Inventor: KAKISHITA Yasuki, Tokyo 100-8280 (JP); HATTORI Hideharu, Tokyo 100-8280 (JP)
(74) Representative: MERH-IP Matias Erny Reichl Hoffmann Patentanwälte PartG mbB
(86) International application number: PCT/JP2023/026974
(87) International publication number: WO 2024/034374

(57) **Abstract**

An object classification device generates region unit information indicating the region information of the object, classifies the object by determination of the object type or state based on the region unit feature value extracted from the region unit information, and the partial region unit feature value extracted from the partial region of the input image, and displays the object classification result for the user. This makes it possible to classify the object type or state accurately even in spite of co-existence of the objects different in size, length, shape, and the like in the image.

## Description

### Incorporation by Reference

This application claims the benefit of foreign priority to Japanese Patent Application No. JP2022-128897, filed August 12, 2022, which is incorporated by reference in its entirety.

### Technical Field

The present invention relates to technology for classifying an object in an image.

### Background Art

There may be the case where an inspection image picked up by an optical microscope, electron microscope, CCD camera, CMOS camera, or the like is used for inspection of cells and materials. In most cases, observation of the inspection image with the naked eye will take a lot of time, and require technical knowledge. Development of technology for automatically classifying an object in the image has been in progress for assisting the inspection of cells and materials using the inspection image.

Japanese Unexamined Patent Application Publication No. 2010-203949 discloses the method for performing local classification using a high-magnification image after performing broad classification using a fixed-sized low-magnification image.

### Summary of Invention

### Technical Problem

In the case of the specific type of the inspection target, objects contained in the image may have the respective sizes and lengths extremely different from one another. When using the fixed-sized low-magnification image, it may be impossible to accurately extract the region information with respect to all objects. If the size of the low-magnification image is determined according to the small object, an entire image of the large object cannot be fit in a patch. It is difficult to accurately extract the region information of the large object. If the size of the low-magnification image is determined according to the large object, there may be the risk of containing many other objects or dust existing around the small object. This may influence the accurate extraction of the region information of the object as a classification target.

An object of the present invention is to attain accurate classification of coexisting objects in an image, which are different from one another in size, length, and shape.

### Solution to Problem

An object classification device of an aspect according to the present invention includes an arithmetic operation device and a storage device for storing a program to be executed by the arithmetic operation device. The arithmetic operation device determines an object region of an entire object in the image, generates information per unit of the object region based on the object region, extracts an object region unit feature value from the information per unit of the object region, extracts a partial region unit feature value from each of one or more partial regions in the object region of the image, and classifies the object based on the object region unit feature value and the partial region unit feature value.

### Advantageous Effects of Invention

According to one aspect of the present invention, accurate classification of the object is allowed even in spite of co-existence of the objects different in size, length, shape, and the like.

### Brief Description of Drawings

Fig. 1 shows an example of a hardware configuration of an object classification system according to the first embodiment.
Fig. 2 shows an example of a function block diagram of an object classification device according to the first embodiment.
Fig. 3A shows an example of a method for calculating region unit information.
Fig. 3B shows an example of a method for calculating region unit information.
Fig. 4 shows an example of the region unit information.
Fig. 5A shows an example of a method for extracting a partial region unit feature value.
Fig. 5B shows an example of a method for extracting a partial region unit feature value.
Fig. 6 shows an example of an object classification method.
Fig. 7 shows an example of a calculation result derived from a classification section by majority.
Fig. 8A shows an example of a method for displaying a classification result.
Fig. 8B shows an example of a method for displaying a classification result.
Fig. 8C shows an example of a method for displaying a classification result.
Fig. 9A shows an example of a GUI for displaying each contribution degree of the respective feature values to the classification result.
Fig. 9B shows an example of a GUI for displaying each contribution degree of the respective feature values to the classification result.
Fig. 9C shows an example of a GUI for displaying each contribution degree of the respective feature values to the classification result.
Fig. 9D shows an example of a GUI for displaying each contribution degree of the respective feature values to the classification result.
Fig. 10 shows an example of a processing flow of the object classification method according to the first embodiment.
Fig. 11 shows an example of a hardware configuration of an object classification system according to the second embodiment.
Fig. 12 shows an example of an evaluation rule with respect to an image group according to the second embodiment.
Fig. 13 shows an example of the region unit information.
Fig. 14 shows an example of the region unit information.

### Description of Embodiments

An object classification device, an object classification method, and an object classification system will be described with reference to attached drawings. In the following description and the attached drawings, components each having the same function structure will be followed by the same reference sign to omit the repetitive explanation.

### First Embodiment

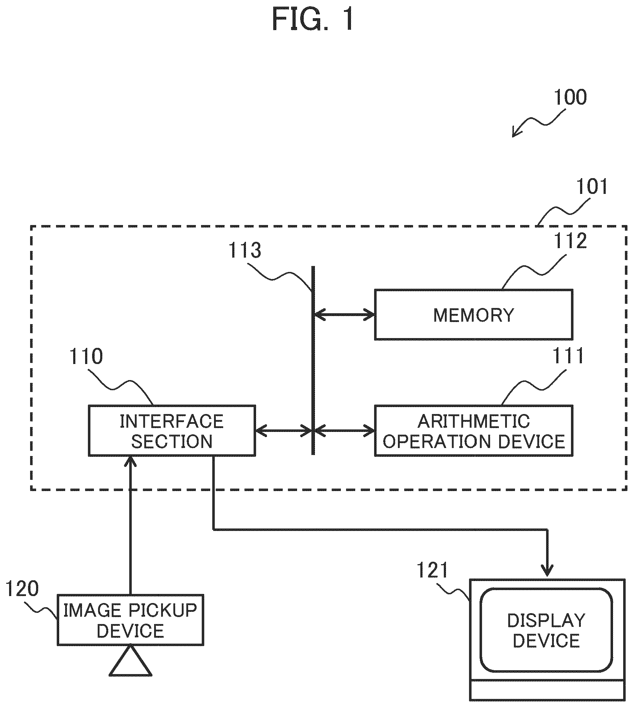

Referring to Fig. 1, an example of the system for classifying objects in an image according to a first embodiment will be described. An object classification system 100 includes an object classification device 101, an image pickup device 120, and a display device 121. The object classification device 101 includes an interface 110, an arithmetic operation device 111, a memory 112 and a bus 113. Transmission/reception of information is performed among the interface 110, the arithmetic operation device 111, and the memory 112 via the bus 113. The object classification device 101 is connected to the image pickup device 120 and the display device 121 via the interface 110.

Each section of the object classification device 101 will be described. The interface 110 represents a communication device for transmission/reception of a signal to/from a device outside the object classification device 101. The image pickup device 120 and the display device 121 represents devices that communicate with the interface 110. The image pickup device 120 and the display device 121 will be described in detail later.

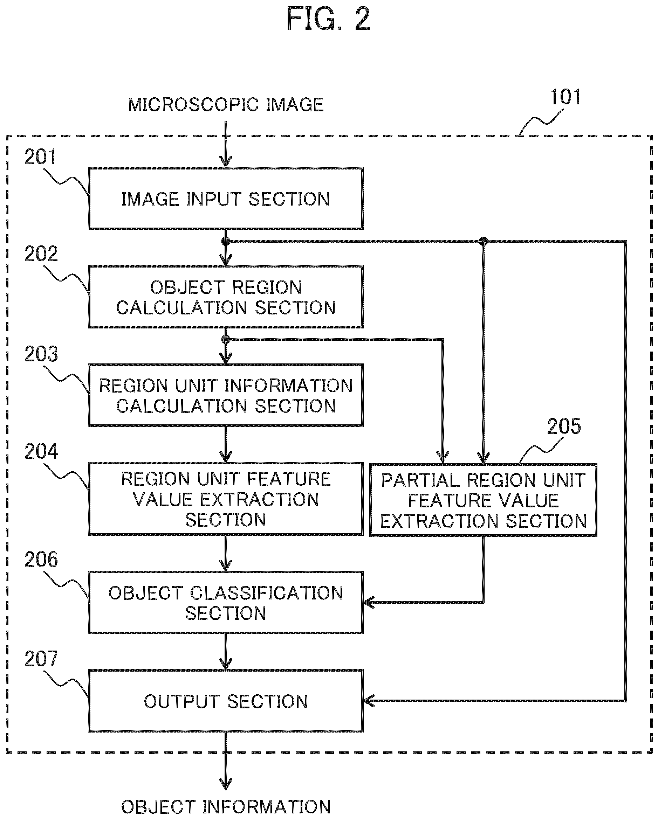

The arithmetic operation device 111 represents the device that executes various types of processing in the object classification device 101, which includes the CPU (Central Processing Unit), FPGA (Field-Programmable Gate Array), and the like. Functions to be performed by the arithmetic operation device 111 will be described later referring to Fig. 2.

The memory 112 represents the device that stores the program to be executed by the arithmetic operation device 111, parameters, coefficients, and processed results, which may be formed as the HDD, SSD, RAM, ROM, and a flash memory.

The object classification device 101 may be configured as a physical calculator system (one or more physical calculators), or a system constructed on a cloud-based calculation resource group (a plurality of calculation resources). The calculator system or the calculation resource group may be configured to include one or more interface devices (including, for example, a communication device and an input/output device), one or more storage devices (including, for example, a memory (main storage) and an auxiliary storage), and one or more arithmetic operation devices.

In the case where the arithmetic operation device executes the program including an instruction code for performing functions, the specified process is executed using the storage device and/or the interface device appropriately. The function, thus, may be at least a part of the arithmetic operation device. The processing executed in terms of the function may be regarded as the one to be executed by the arithmetic operation device, or the system including the arithmetic operation device. The program may be installed from the program source.

The program source may be a program distribution calculator, or a storage medium readable by the calculator (or the computer-readable non-fugitive storage medium). Descriptions of the respective functions are mere examples. It is possible to combine a plurality of functions into a single function, or divide the single function into a plurality of functions.

The image pickup device 120 is configured to pick up an image of the object, which may be formed as a camera and a microscope. The image pickup device 120 transmits the picked-up image to the object classification device 101. The image pickup device 120 may be replaced with a communication device that receives the image via the network, or the recording device that reads the image recorded in the recording medium for reception.

The display device 121 displays the object classification information to be output by the object classification device 101, which may be formed as the display and printer.

Hereinafter, the object classification device 101 will be described in detail.

Fig. 2 is an example of a function block diagram of the object classification device 101 according to the first embodiment. Those functions may be configured as dedicated hardware, or configured as the arithmetic operation device 111 to be operated in accordance with software.

An object classification device 101 includes an image input section 201, an object region calculation section 202, a region unit information calculation section 203, a region unit feature value extraction section 204, a partial region unit feature value extraction section 205, an object classification section 206 and an output section 207. Hereafter, each section will be described.

The image input section 201 receives an image including an object as the classification target, which has been input through the interface 110. The input image is input to the object region calculation section 202, the partial region unit feature value extraction section 205, and the output section 207 via the memory 112.

The object region calculation section 202 will be described. The object region calculation section 202 extracts an object region as the classification target using the input image received by the image input section 201. The use of a region divider will be described as an example of a method for extracting the object region.

The region division represents the process for dividing the image into sematic sets in a pixel unit. For example, the image is binarily divided into a foreground constituted by pixels having the object to be classified, and a background constituted by the rest of the pixels. A combined region of those classified as the foreground is detected so that the region is detected for each object.

The region division process may be executed using U-Net, SegNet, and the like. In the case of densely existing objects in the detection image, the instance segmentation or the like may be used for calculating the region division result for each object instead of executing the generally employed region division process.

The region unit information calculation section 203 will be described. The region unit information calculation section 203 outputs the region information of each object such as the size, length, deformation degree, luminance, and color, which is expressed as the fixed-sized one-dimensional or two-dimensional information.

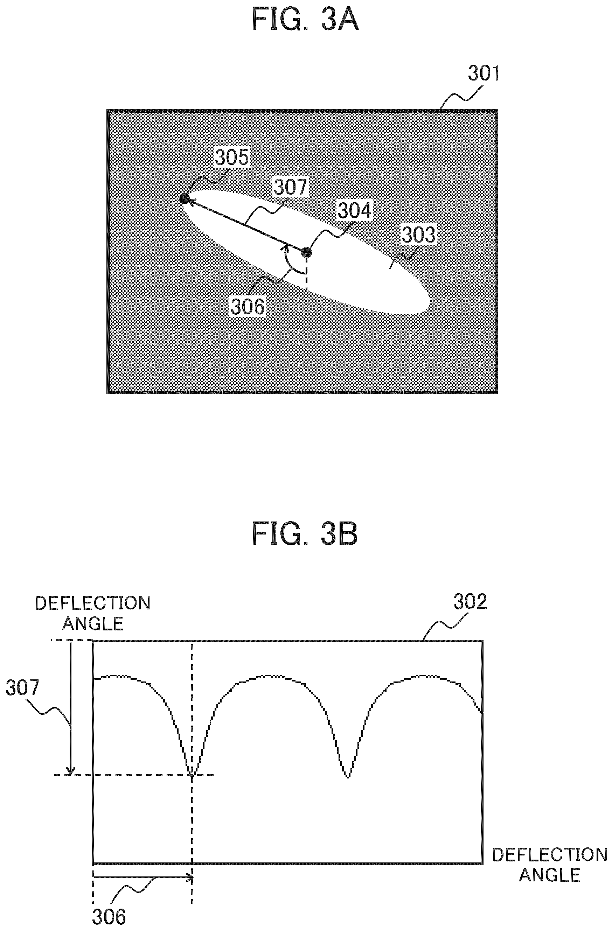

An example of the region unit information will be described referring to Figs. 3A and 3B. Referring to an example of the region unit information calculation as shown in Figs. 3A and 3B, the shape of the region is expressed as the fixed-sized waveform information (two-dimensional information) by plotting each distance from a point in the object region to the respective contour points in the region by the polar coordinate form.

Fig. 3A shows a region division result 301, and Fig. 3B shows region unit information 302. The region division result 301 is contained in the object region information output by the object region calculation section 202. An object region 303 represents the object region in the region division result 301. An object region 303 represents a point 304 in the region division result 301.

The region unit information 302 represents the region unit information to be calculated based on the object region 303. A point 305 represents the point on a contour of the object region 303. A deflection angle 306 represents the deflection angle defined by a radius vector from the point 304 to 305 to an initial line vertically extending (downward in the drawing) from the point 304 at a reference angle of 0°. A distance 307 represents the distance that extends from the point 304 as an original point to the point 305 on the image. As Fig. 3B shows, a horizontal axis indicates the deflection angle 306, and a vertical axis indicates the distance 307. The deflection angle 306 increases clockwise. The vertical axis indicates the distance 307 that increases along the downward direction.

The region unit information calculation section 203 calculates the point 304 from the object region 303 contained in the input region division result 301. The method for calculating the point 304 may be implemented using a centroid or an inner center of the object region 303, for example. As a result, it is possible to acquire the region unit information that attains classification with higher accuracy. It is also possible to use another point in the object region, which is different from the above-described point. The region unit information calculation section 203 scans the pixel in the region division result 301 from the point 304 in the vertical direction to calculate the distance from the point 304 to the contour of the object region 303. The region unit information calculation unit 203 plots the measured distance in the region unit information 302.

The horizontal axis of the region unit information 302 represents the deflection angle to the initial line vertically extending from the point 304 at a reference angle of 0°, and the vertical axis represents the distance from the point 304 to the contour. Referring to the point 305 existing on the contour located in the direction at the deflection angle 306 from the point 304, if the distance from the point 304 to the point 305 corresponds to the distance 307, the point defined by the deflection angle 306 and the distance 307 in the region unit information 302 is plotted. The shape of the object region 303 is expressed as the fixed-sized waveform information like the region unit information 302.

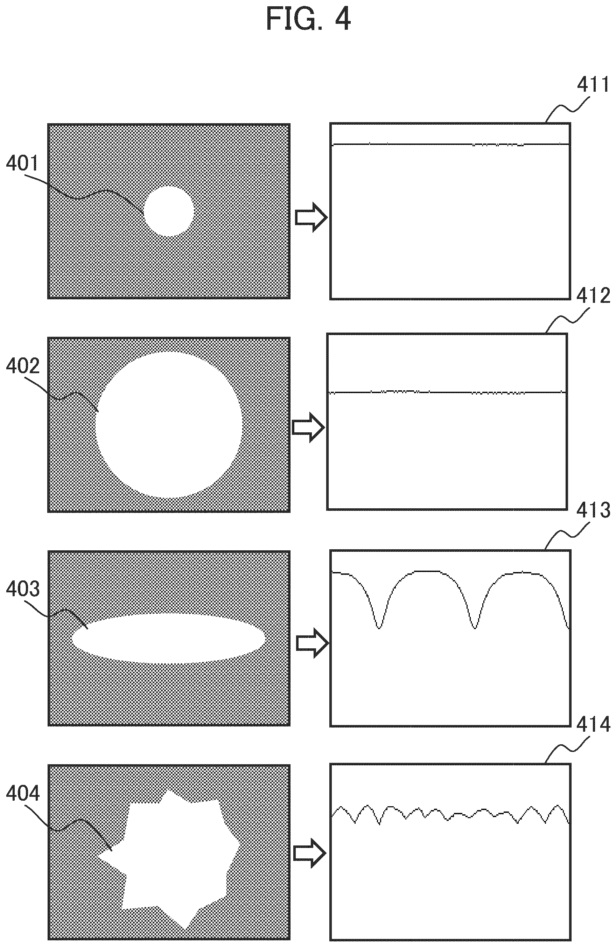

Fig. 4 shows examples of extracting the region unit information with respect to objects in different shape. Objects 401, 402, 403, 404 are shown as examples of the objects different in shape. Each of region unit information 411, 412, 413, 414 represents an example of the region unit information extracted from the objects 401, 402, 403, 404, respectively. It is assumed that the centroid is used as a reference point in the object region in Fig. 4. The method for expressing the region unit information is similar to the one as described with respect to the region unit information 302 referring to Fig. 3B.

The object 401 has a circular shape having the distance from the point in the object region to the contour equal in an arbitrary direction. The region unit information 411 is, thus, expressed as a straight line. The object 402 also has a circular shape having its size larger than that of the object 401. The region unit information 412 is linearly expressed like the region unit information 411, but is plotted at the position below the position corresponding to the region unit information 411.

As the object 403 has a long and thin shape, the region unit information 413 is expressed as a periodic wave-like shape. The object 404 has its contour unsmooth in the strained state. The corresponding region unit information 414 reflects the strain. As described above, the region unit information can be expressed as the fixed-sized waveform information in accordance with the object shape different in size, length, and shape.

Assuming that the region information of those objects is expressed as the fixed-sized low-magnification image, execution of the process for matching the image size with the small object may fail to contain an entire shape of an object in the image. Meanwhile, execution of the process for matching the image size with the large object, the resultant image having the small object may contain the region irrelevant to the object to be classified. If the target object exists in the region having densely packed objects of other types, or around the object other than the one to be classified such as the dust, the influence of the surrounding object and the dust may prevent correct extraction of the shape information.

The use of the region unit information as described in the embodiment of the present specification allows the target object shape to be expressed as the fixed-sized information while suppressing the influence given by other objects even in the case of co-existence of objects different in size, length, and shape. This makes it possible to classify the objects with high classification accuracy in association with the region unit feature value extraction section 204, a partial region unit feature value extraction section 205, and the object classification section 206, which will be described later.

The region unit information only using the object region information output by the object region calculation section 202 has been described. In another example, the region unit information may be extracted using both the input image received from the image input section 201 and the object region information.

Concerning the example described referring to Figs. 3A and 3B, the region unit information calculation section 203 may be configured to calculate quantitative values such as average and variance values of luminance of the input image on the line formed between the point 304 and the point 305 on the contour line, and to perform plotting to the deflection angle so that the region unit information is extracted. The region unit information may be one-dimensional information using indexes, for example, statistical values including the area, circularity, luminance, and color tone of the object region. The region unit information calculation section 203 may be configured to output the region unit information of a plurality of types.

The method for extracting the information of the distance from one point in the object to each contour point in the region by the polar coordinate form has been described as an example of the region unit information. The method for generating the region unit information, however, is not limited to the one as described above. An arbitrary method may be implemented so long as the extracted region information is expressed as the fixed-sized one-dimensional or two-dimensional information.

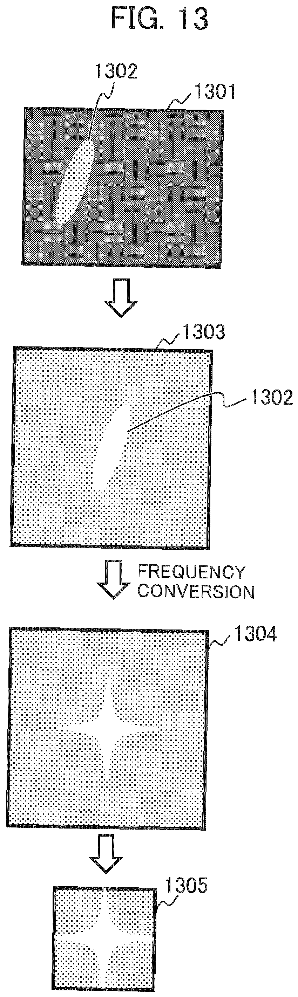

An example of acquiring the region unit information using frequency conversion will be described referring to Fig. 13. An image 1301 represents the input image including an object 1302. A pre-frequency-conversion image 1303 represents an image for frequency conversion, having only a region of the object 1302 set at the center of the image. A post-frequency-conversion image 1304 represents an image derived from frequency conversion of the pre-frequency-conversion image 1303. An image of region unit information 1305 is derived from extraction of a part of the post-frequency-conversion image 1304.

Based on the object region information output by the object region calculation section 202, the region unit information calculation section 203 extracts the object region 1302 from the image 1301. The extracted object region 1302 is set at the center of the pre-frequency-conversion image 1303. The luminance value of the region of the pre-frequency-conversion image 1303 except the object region 1302 is assumed to be a fixed value (zero, for example). The object region 1302 may be an image obtained by extracting the object region from the image 1301, or the object region information output by the object region calculation section 202 (binarily expressed image constituted by the object region and the other region).

The region unit information calculation section 203 sets the size of the pre-frequency-conversion image 1303 to the maximum size of the object contained in the input image. Then the post-frequency-conversion image 1304 is generated by the frequency conversion such as Fourier transform. The post-frequency-conversion image 1304 exhibits higher frequency component as it moves away from the center. The larger component is expressed by the higher luminance.

As the low-frequency component is essential for entire shape information of the object region, the region unit information calculation section 203 extracts the region indicating the low-frequency component of the post-frequency-conversion image 1304, and defines the extracted region as the region unit information 1305. The example of Fig. 13 shows the low-frequency component at the center of the post-frequency-conversion image 1304. A partial image at the center is extracted in the predetermined fixed size.

The pre-frequency-conversion image is formed as the fixed-sized two-dimensional image. As most region of the object with long and thin shape has the fixed value, the memory utilization ratio is deteriorated. The use of the low-frequency component of the post-frequency-conversion image allows the object shape to be efficiently expressed as the fixed-sized two-dimensional information.

When placing the object 1302 at the center of the pre-frequency-conversion image 1303, normalization processing may be executed, for example, by rotating the image to have the major axis of the object vertically oriented. In the example of Fig. 13, the low-frequency component exists in the center of the post-frequency-conversion image 1304. The method for extracting the partial image at the center with predetermined fixed size has been described. The frequency conversion method of any other type may be employed so long as only the information relating to the necessary frequency component can be extracted in accordance with the conversion method. In the case of the frequency conversion method for extracting multiple frequency conversion results each with the different frequency component from the input image, the frequency conversion result relating only to the necessary frequency component is extracted so that the extracted result is set as the region unit information.

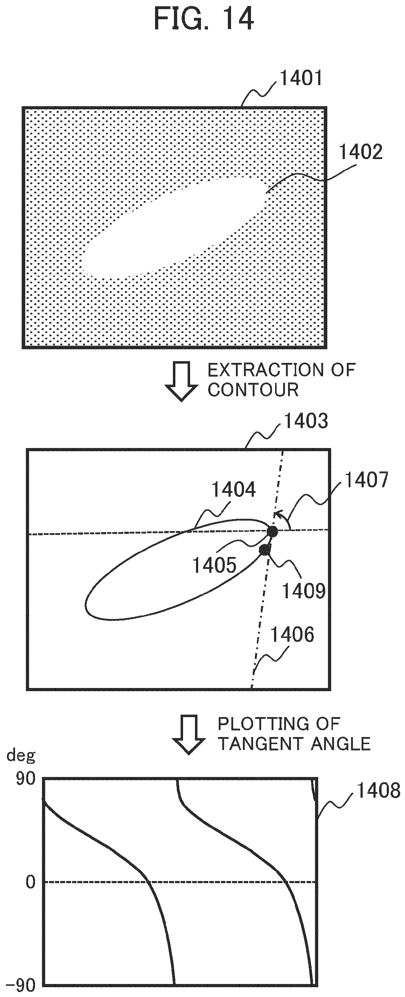

Referring to Fig. 14, an explanation will be made with respect to another type of the region unit information formed by plotting tangent angles at the respective points on the contour of the object as an example of the region unit information. A region division result 1401 represents the object region information to be output by the object region calculation section 202. An object region 1402 represents the object region in the region division result 1401. An object contour image 1403 is acquired as a result of application of image processing for extracting only a contour of the object to the region division result 1401.

An object contour line 1404 represents the contour of the object region 1402. A point 1405 on the contour represents the point on the object contour line 1404. A point 1409 on the contour represents the point on the contour line 1404, which is adjacent to the point 1405 on the contour. A tangent 1406 represents the tangent to the point 1405 on the contour line. An angle 1407 is formed between the tangent 1406 and the horizontal line. Region unit information 1408 is acquired by plotting the angle 1407 to the respective points 1405 on the contour.

The region unit information calculation section 203 obtains the object contour image 1403 and the object contour line 1404 by applying edge extraction processing such as a Sobel filter to the region division result 1401 output by the object region calculation section 202. The point 1405 on the contour is then set on the object contour line 1404. The number E of the points 1405 on the contour is defined as a predetermined fixed value. For example, a plurality of the points 1405 on the contour are set at equal intervals based on the value obtained by dividing the total length of the object contour line 1404 by the number E.

The region unit information calculation section 203 obtains the angle 1407 by calculating the tangent 1406 to each of the points 1405 on the contour. It is assumed that the angle 1407 is in a range from -90° to 90° with respect to the horizontal line at an angle of 0°. The region unit information 1408 is obtained by plotting the respective angles 1407 in a graph. The horizontal and vertical axes of the region unit information 1408 correspond to positions of the respective points 1405 on the contour, and the angle 1407, respectively The value of the horizontal axis ranges from 1 to E. The size of the region unit information 1408 is fixed irrespective of the object size.

The above-described process allows expression of the shape information of the object contour line as the fixed-sized graph (two-dimensional information). The process is different from the polar coordinate form in that the center point does not have to be specified, and the information of the object size is not contained. Fig. 14 shows the region unit information 1408 as the two-dimensional information for assisting comprehension of the process. Such information may be expressed as the one-dimensional information by using the signal intensity (luminance for the image) corresponding to the angle 1407. An example has been described that the horizontal direction is defined as a basis of the angle. The tangent to the point 1409 on the contour adjacent to the point 1405 may be defined as the basis of the angle.

The region unit information calculation section 203 calculates and outputs the region unit information derived from expressing the region information of the entire object as the fixed-sized one-dimensional or two-dimensional information.

The region unit feature value extraction section 204 will be described. The region unit feature value extraction section 204 extracts a region feature value of the entire classification target object from the region unit information output by the region unit information calculation section 203 as described above. The feature value extraction method may be implemented by the machine learning process such as Convolutional Neural Network (CNN) and a perceptron, or a manually designed feature value extraction process such as Histogram of Oriented Gradients (HOG) .

If the region unit information calculation section 203 outputs a plurality of the region unit information pieces, the feature value may be extracted from those pieces of the region unit information integrally, or extracted from each of the region unit information individually.

The partial region unit feature value extraction section 205 will be described. The partial region unit feature value extraction section 205 extracts the feature value relating to the texture, luminance, color tone, and the like from the partial region of the input image output by the image input section 201 based on the object region information output by the object region calculation section 202 as described above. The feature value extraction method may be implemented by using the machine learning process such as the CNN and the perceptron, and the manually designed feature value such as the HOG, or the quantitative value of the luminance and variance in the partial region as the feature value.

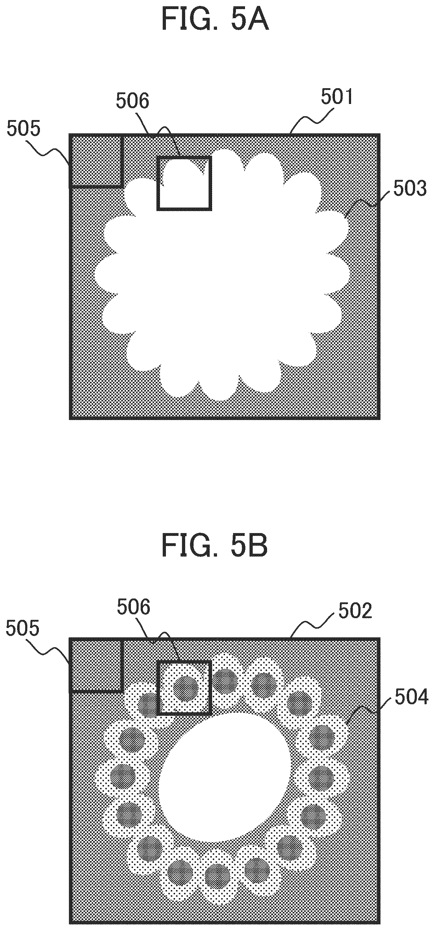

An example of the partial region unit feature value extraction will be described referring to Figs. 5A and 5B. Fig. 5A shows an example of the object region information. Fig. 5B shows an example of an input image from which the object region information as shown in Fig. 5A is extracted.

An object region information 501 represents an example of the object region information to the single object output by the object region calculation section 202. An object region 503 is in a white display, and a background region is in a gray display. An input image 502 represents a region of the input image corresponding to the object region information 501. An object 504 corresponding to the object region 503 represents an entire glandular structure having cells arrayed to the cavity. ROI 505 and 506 represent regions of interest in the object region information 501 and the input image 502, respectively.

The partial region unit feature value extraction section 205 sets the region of interest of the object region information 501 at its upper left section (ROI 505). The width and height of the region of interest are to be preliminarily defined by a user. Based on the object region information in the region of interest, the partial region unit feature value extraction section 205 determines whether or not the partial region unit feature value is extracted.

If the pixels belonging to the object region 503 exists in the region of interest in the proportion equal to or higher than the predetermined threshold value, the partial region unit feature value extraction section 205 extracts the partial region unit feature value. For example, if the threshold value is set to 50% or higher, pixels belonging to the object region 503 do not exist in the ROI 505. The resultant proportion becomes lower than the threshold value as indicated by the example shown in Fig. 5. Accordingly, the partial region unit feature value is not extracted from the ROI 505. Meanwhile, as the pixels belonging to the object region 503 exist in the proportion equal to or higher than 50% in the ROI 506, the partial region unit feature value is extracted from the ROI 506.

Upon completion of determination as to execution propriety of extraction of the partial region unit feature value in the specific region of interest, and completion of extraction processing, the partial region unit feature value extraction section 205 executes the similar processing while changing the position of the region of interest by raster scanning. Upon completion of the processing to the entire input object region, the partial region unit feature value extraction section 205 outputs the partial region unit feature value.

The object classification section 206 will be described. The object classification section 206 will be described. The object classification section 206 classifies the objects based on the region unit feature value output by the region unit feature value extraction section 204 and the partial region unit feature value output by the partial region unit feature value extraction section 205.

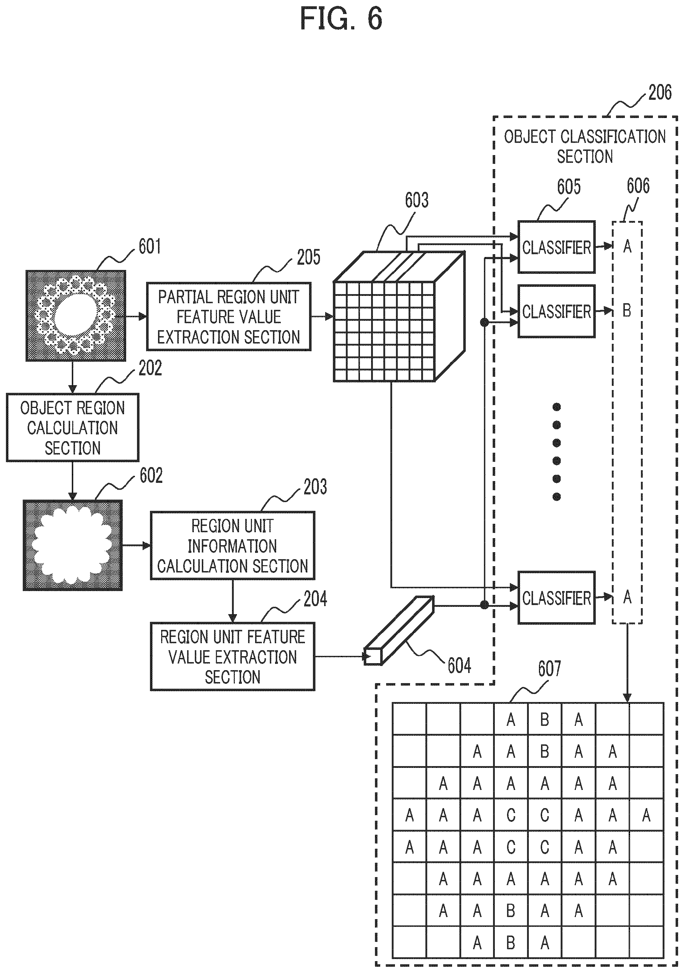

Referring to Fig. 6, an example of the object classification method will be described. An input image 601 represents the input image output by the image input section 201. Object region information 602 represents the object region information to be output by the object region calculation section 202. A partial region unit feature value 603 represents the partial region unit feature value output by the partial region unit feature value extraction section 205. A region unit feature value 604 represents the region unit feature value extracted by the region unit information calculation section 203 and the region unit feature value extraction section 204.

A classifier 605 is configured to calculate an object classification result 606 per unit of the partial region based on a part of the partial region unit feature value 603 and the region unit feature value 604. A classification result map 607 represents an example of a result of mapping the classification results 606 per unit of the partial region in accordance with an extraction position of the partial region unit feature value 603 input to the classifier. The processing is executed by the object classification section 206 in a range defined by the broken line as shown in Fig. 6.

The region unit feature value 604 and the partial region unit feature value 603 are input to the object classification section 206. The region unit feature value 604 is expressed as a single feature value vector with respect to the single object. Meanwhile, the partial region unit feature value 603 is constituted by the feature value vector for each of the partial regions. The object classification section 206 includes a single unit of classifier 605 which receives inputs of the feature value vectors extracted from the respective partial regions of the partial region unit feature value 603, and the region unit feature value 604, and outputs the classification result 606 per unit of the partial region.

As the example in Fig. 6 shows, it is assumed that object types (objects A to C) are output as the classification results. The classification method using the classifier 605 may be implemented by the machine learning process such as Logistic Regression, Support Vector Machine (SVM), and the like, or the manually designed classification system. The classification result 606 per unit of the partial region is recorded in the classification result map 607 in accordance with the extraction position of the partial region unit feature value 603 which has been input to the classifier 605.

After calculating classification results of all parts of the partial region unit feature value 603, and recording those results in the classification result map 607, the object classification section 206 calculates a comprehensive classification result with respect to the object based on the content of the classification result map 607. For example, the comprehensive classification result may be calculated by taking a majority with respect to the classification results of the classification result map 607.

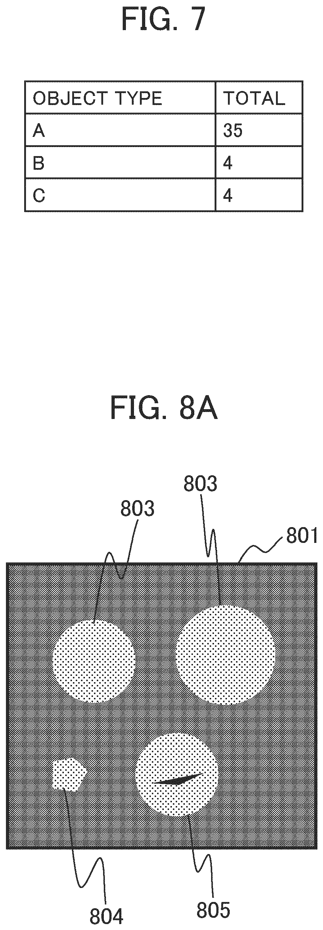

Fig. 7 shows an example of the calculation result by majority, which is calculation from the classification result in the classification result map 607. Referring to the example of Fig. 7, as the number of classification results with respect to the object A is the largest, the object in the input image 601 is determined as the object A. The object classification section 206 calculates the classification result with respect to the respective objects in the image.

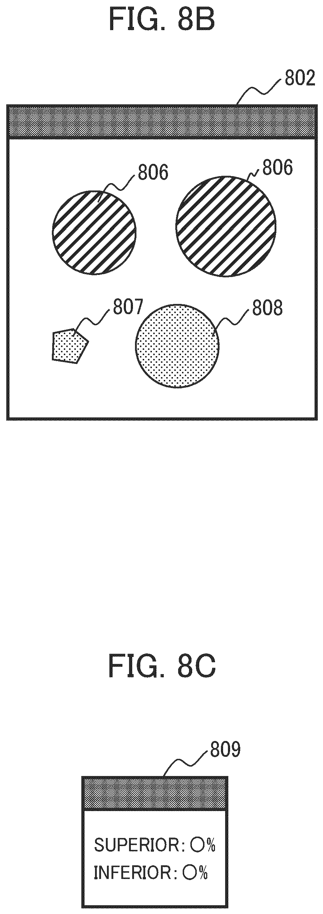

The output section 207 will be described. The output section 207 displays the classification result derived from the object classification section 206 for the user. Referring to Figs. 8A, 8B, 8C, an example of the method for displaying the classification result for the user will be described. Fig. 8A shows an example of an input image. It is assumed that an input image 801 shows granular materials picked up as an inspection image as an example of the input image to be received by the image input section 201. It is assumed that the granular material as the example shown in Fig. 8A, which has a large flawless round shape is regarded as exhibiting superior quality. In this case, it is assumed that each of particles 803 is regarded as exhibiting superior quality, and each of particles 804 and 805 is regarded as exhibiting inferior quality.

Fig. 8B shows an example of a classification result window. A classification result window 802 represents the window for displaying the classification result for the user. Classification results 806, 807, 808 represent classification results with respect to the particles 803, 804, 805, respectively. Fig. 8C shows an example of a quantitative value display window. A quantitative value display window 809 represents an example of the window that displays the percentage of each object in the image.

As examples shown in Figs. 8A, 8B, 8C indicate, it is assumed that the object classification section 206 classifies the objects (particles) into those with superior quality and those with inferior quality. Accordingly, the particles 803 are classified as exhibiting superior quality, and the particles 804, 805 are classified as exhibiting inferior quality. Referring to the classification result window 802, the classification result is visualized by distinguishing the object regions in distinct colors in accordance with the classification result. Alternatively, the visualized result is displayed in combination with the input image. In this example, the particle with superior quality and the particle with inferior quality are expressed distinguishingly using different textures.

The output section 207 may be configured to calculate the quantitative value such as the number and the proportion of the respective types of objects in the input image, and display the calculation result on the quantitative value display window 809.

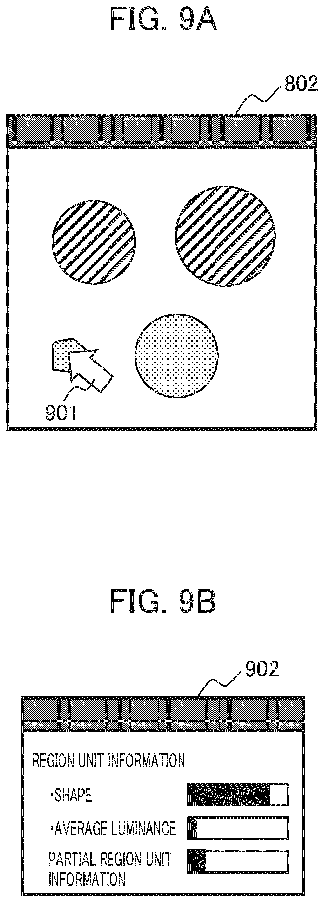

The output section 207 may be configured to display evaluation values such as values of the contribution degree and validity of the region unit feature value and the partial region unit feature value with respect to the classification result. Each of Figs. 9A to 9D shows an example of GUI for displaying the contribution degree of each feature value to the classification result.

The GUI screen as shown in Fig. 9A displays a pointer 901 on the classification result window 802. The pointer 901 is used for the user to select the classification result with respect to the object in the classification result window 802.

Fig. 9B shows an example of a contribution degree display window. A contribution degree display window 902 displays each contribution degree of the region unit information and the partial region unit information with respect to the object classification result.

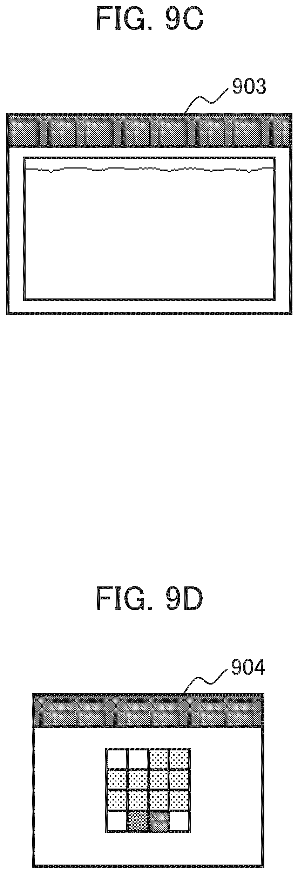

Fig. 9B shows an example of a region unit information display window. A region unit information display window 903 as shown in Fig. 9C represents the window for displaying the region unit information. Fig. 9D shows an example of a partial region unit contribution degree display window. A partial region unit contribution degree display window 904 represents the window for displaying the contribution degree for each of the partial regions.

The output section 207 calculates the contribution degree of each feature value with respect to the classification result after the object classification section 206 calculates the classification result. The contribution degree may be calculated by an analysis process such as GradCAM and the like. Each of the contribution degrees of the region unit feature value and the partial region unit feature value is obtained with respect to the classification result for each of the partial regions to calculate the total of values over the entire region. The contribution degree of each of the feature values over the entire object region is calculated. The calculated contribution degree is displayed for the user via the contribution degree display window 902.

As Fig. 9A shows, after displaying the classification result window 802 for the user, the window is kept waited for an input from the user. For example, when the user clicks a specific object in the classification result window 802 using the pointer 901, as Fig. 9A shows, the contribution degree of each feature value with respect to the classification result of the object is displayed on the contribution degree display window 902.

Referring to the example as shown in Fig. 9B, the contribution degree of the "shape" of the region unit feature value is the highest, and the contribution degree of the partial region unit feature value is the next highest. The region unit information about the "shape" is assumed to be defined as the information about the distance from the point in the object region to the contour line in each deflection angle direction as described with respect to the region unit information calculation section 203. It is possible to display the information about the contribution degree of only one of the region unit information and the partial region unit information.

As Fig. 9C shows, for example, the output section 207 automatically displays the "shape" of the region unit feature value, exhibiting the highest contribution degree on the region unit information display window 903. The content to be displayed on the region unit information display window 903 may be switched selectively by the user. For example, when the user clicks the item name of the region unit information in the contribution degree display window 902, the clicked region unit information may be displayed on the region unit information display window 903.

As Fig. 9D shows, the partial region unit contribution degree display window 904 displays a contribution degree map for each of the partial regions. For example, referring to the example of the partial region unit contribution degree display window 904, the level of the contribution degree is expressed by the luminance value (white: low contribution degree, black: high contribution degree). Display of the information about the object classification result as described above assists understanding of the user.

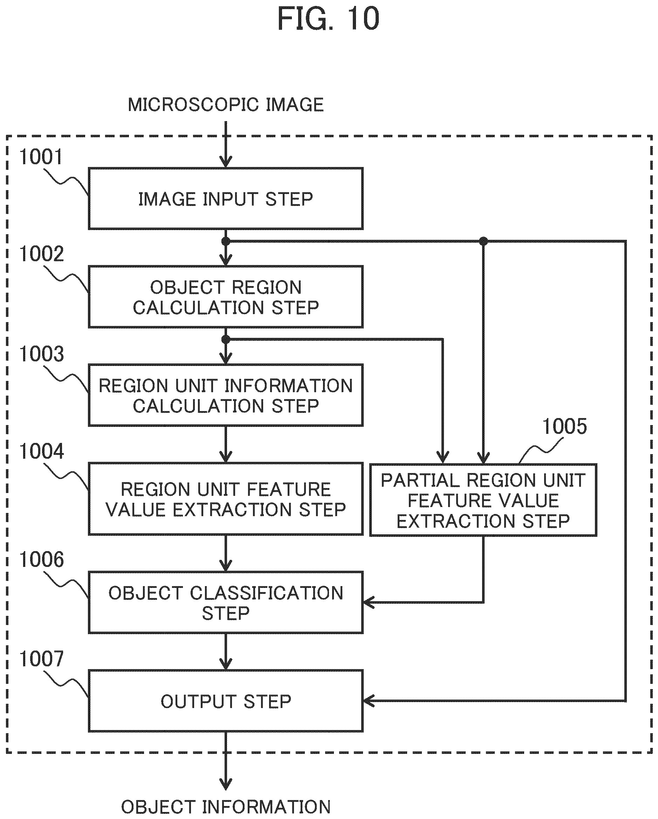

The first embodiment has been described for each function block in detail. An embodiment of the present invention does not have to be constituted by the function blocks as shown in Fig. 2, but may be arbitrarily formed so long as the processing for implementing operations of the respective function blocks can be executed. Fig. 10 shows an example of the processing flow diagram according to the first embodiment. The respective steps correspond to the respective sections of the function block diagram as shown in Fig. 2.

In an image input step 1001, a pick-up image of the object, which has been input through the interface 110 is received.

In an object region calculation step 1002, an object region as the classification target is extracted using the input image received in the image input step 1001. The object region extraction method may be implemented as described with respect to the object region calculation section 202.

In a region unit information calculation step 1003, based on the object region information calculated in the object region calculation step 1002, the region information such as the size, length, and deformation degree of each object is expressed and output as the fixed-sized information. The region unit information generation method may be implemented as described with respect to the region unit information calculation section 203.

In a region unit feature value extraction step 1004, the region feature value of the classification target object is extracted from the region unit information calculated in the region unit information calculation step 1003. The method for extracting the region unit feature value may be implemented as described with respect to the region unit feature value extraction section 204.

In a partial region unit feature value extraction step 1005, based on the object region information calculated in the object region calculation step 1002, the feature value relating to the texture, luminance, color tone, and the like is extracted from the partial region of the input image received in the image input step 1001. The method for extracting the partial region unit feature value may be implemented as described with respect to the partial region unit feature value extraction section 205.

In an object classification step 1006, based on the region unit feature value calculated in the region unit feature value extraction step 1004, and the partial region unit feature value calculated in the partial region unit feature value extraction step 1005, the object classification is performed. The object classification method may be implemented as described above with respect to the object classification section 206.

In an output step 1007, the classification result calculated in the object classification step 1006 is displayed for the user. The method for displaying the classification result for the user may be implemented as described with respect to the output section 207.

The object classification device and the object classification method as described in the first embodiment allow accurate classification of type or state of the object even in spite of co-existence of the objects different in size, length, shape, texture, and the like.

### Second Embodiment

In a second embodiment, an explanation will be made with respect to an object classification system for comprehensively determining the type and state of the object from the entire image or a plurality of image groups using the object classification device according to the first embodiment.

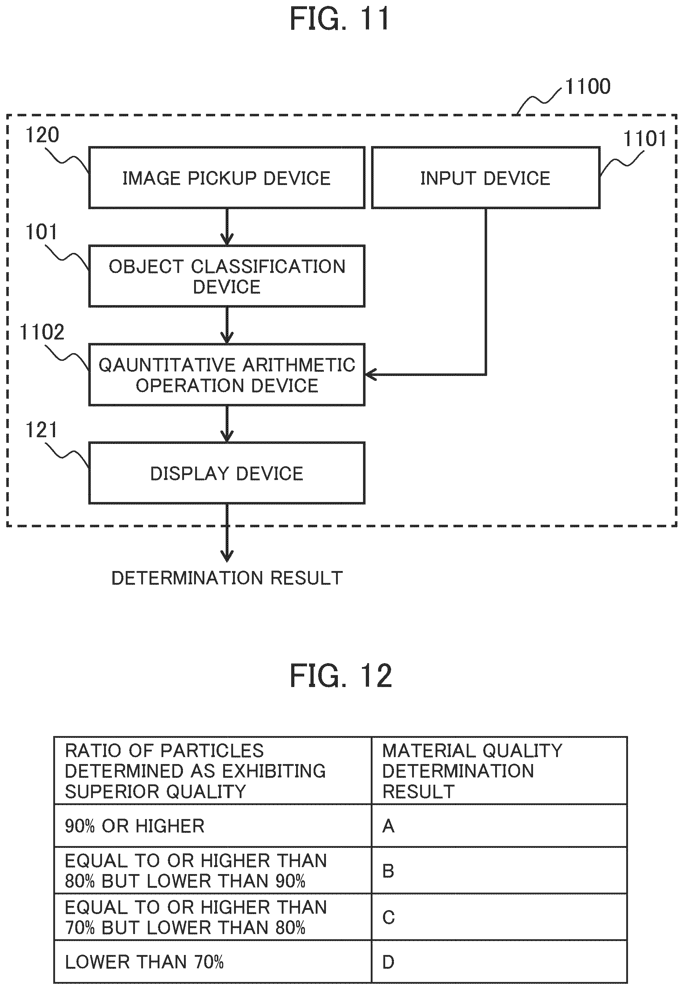

Fig. 11 shows a hardware configuration according to the second embodiment. An object classification system 1100 includes the image pickup device 120 such as a camera and a microscope, an input device 1101 that receives operations of the user, and the object classification device 101 as described in the first embodiment. The object classification system 1100 further includes a quantitative arithmetic operation device 1102 that calculates quantitative values such as the total number and the proportion of the respective objects from the object classification result output by the object classification device 101 to obtain determination results with respect to the type and state of the entire image or the image group, and the display device 121 that displays the determination results output by the quantitative arithmetic operation device 1102 for the user.

The image pickup device 120 and the display device 121 corresponding to the hardware components as described in the first embodiment, and explanations of those devices, thus, will be omitted. Hereafter, the input device 1101 and the quantitative arithmetic operation device 1102 will be described.

The input device 1101 represents such device as a keyboard and a mouse for receiving operation signals from the user. The input device 1101 is used to select the image group subjected to the quantitative arithmetic operation by the quantitative arithmetic operation device 1102 from the image groups picked up primarily by the image pickup device 120.

The quantitative arithmetic operation device 1102 calculates the quantitative value with respect to one or more image groups from the object classification result output by the object classification device 101. The quantitative value may be the total value or the proportion of the respective objects, and the sum total or an average of identification scores. The quantitative value is calculated from the entire object classification results with respect to the image group selected by the user via the input device 1101. After that, the type or state of the image group is then determined based on the calculated quantitative value.

The flow of the object classification system processing according to the second embodiment will be described, taking evaluation of quality of the granular material as an example. The quality represents the state of the granular material. The image pickup device 120 picks up images of the granular material at a plurality of positions. The picked-up images are input to the object classification device 101, and particles in the respective images are classified into superior quality particles and inferior quality particles.

The user operates the quantitative arithmetic operation device 1102 to calculate the quantitative value from the image group picked up from the single material via the input device 1101. The quantitative arithmetic operation device 1102 integrates object classification results with respect to all the input image groups, and calculates the ratio between the superior quality particles and the inferior quality particles. The quantitative arithmetic operation device 1102 calculates the material evaluation result in accordance with the ratio of the superior quality particles while following the rule as indicated by Fig. 12, for example. The calculated material evaluation result is displayed for the user via the display device 121.

This allows the user to determine the type and state of the input image group in accordance with the classification result of the objects existing in one or more input images.

### Third Embodiment

Another embodiment of the present specification will be described. The region unit information calculation section 203 may be configured to execute the process for suppressing point fluctuation when determining the point in the object region. In the process, the pixel on the object may only be specified as a candidate for the point, or the distance (distance image) from each pixel to the background on the object may be calculated for weighting in accordance with the calculated distance.

With reference to the region unit information calculation section 203, the region unit information has been described as the two-dimensional graph information. However, the information may be expressed by another expression method. For example, the vertical axis may be expressed by the luminance, color tone, and the like. It is possible to execute pre-processing or weighting to the input image upon calculation of the region unit information so that robustness of the region unit information is improved.

When calculating the region unit information by the polar coordinate form, or from each point on the contour line, the point for starting the region unit information calculation may be specified based on the object region information so that the phase shift is suppressed. For example, there may be the method for calculating the region unit information from the farthest point or the nearest point from/to the center point in the object region. The starting point may be determined based on the shape of the object region. This makes it possible to select the more appropriate starting point.

The method for determining the classification results of the entire objects by majority has been described with reference to the object classification section 206. The method for determining the classification results of the entire objects is not limited to the one as described above. For example, determination may be made based on the sum total of the classification scores in the object region, or based on the rule for the case where the fixed number or the fixed proportion of the specific classification results exist in the object region. Alternatively, weighting may be performed when acquiring the score, or taking the majority based on the object region information.

It should be noted that the present disclosure is not limited to the embodiments described above, and includes various modifications. For example, the above-described embodiments have been described in detail in order to facilitate the understanding of the present invention, and the present invention is not necessarily limited to those including all of the described configurations. In addition, part of the configuration of one embodiment can be replaced with the configurations of other examples, and in addition, the configuration of the one example can also be added with the configurations of other embodiments. In addition, part of the configuration of each of the embodiments can be subjected to addition, deletion, and replacement with respect to other configurations.

The respective structures, functions, processing sections, and the like may be realized through hardware by designing those elements partially or entirely using the integrated circuit, for example. The respective structures and functions may also be realized through software by interpreting and executing the program for the processer to implement the respective functions. Information of the program, table, file and the like for realizing the respective functions may be stored in the recording device such as the memory, hard disk, and SSD (Solid State Drive), or the recording medium such as an IC card and SD card.

The foregoing embodiments show the control lines and information lines which are considered as necessary for the explanation. However, they do not necessarily indicate all the control lines and the information lines of the product. All the structures may be considered as being interconnected with one another.

## Claims

1. An object classification device for classifying an object in an image, comprising:
an arithmetic operation device; and
a storage device for storing a program to be executed by the arithmetic operation device, wherein
the arithmetic operation device
determines an object region of an entire object in the image,
generates information per unit of the object region based on the object region,
extracts an object region unit feature value from the information per unit of the object region,
extracts a partial region unit feature value from each of one or more partial regions in the object region, and
classifies the object based on the object region unit feature value and the partial region unit feature value.

2. The object classification device according to claim **1,** wherein
the information per unit of the object region is formed as a fixed-sized one-dimensional or two-dimensional signal indicating a feature of the object region.

3. The object classification device according to claim 2, wherein
the arithmetic operation device is configured to set a point in the object region, and to generate the information per unit of the object region by a polar coordinate form having the point as an original point.

4. The object classification device according to claim 1, wherein
the arithmetic operation device generates the information per unit of the object region based on information of the object region and a pixel of the image.

5. The object classification device according to claim 3, wherein
the arithmetic operation device determines a starting point of a deflection angle when generating the information per unit of the object region by the polar coordinate form based on a shape of the object region.

6. The object classification device according to claim 1, wherein
the arithmetic operation device analyzes the object region unit feature value and/or the partial region unit feature value, and a classification result of the object, determines an evaluation value of the information per unit of the object region and/or the partial region unit feature value with respect to the classification result, and displays the evaluation value for a user.

7. The object classification device according to claim 1, wherein
the arithmetic operation device
determines a classification result per unit of the partial region based on the object region unit feature value and the partial region unit feature values of a plurality of the partial regions, and
classifies the object based on the classification result per unit of the partial region.

8. An object classification system comprising:
the object classification device according to any one of claims 1 to 7;
an image pickup device for picking up one or more images to be input to the object classification device; and
a quantitative arithmetic operation device for calculating a quantitative value for each type of an object contained in the one or more images from a classification result of the object classification device with respect to the one or more images, wherein
the one or more images are classified based on the quantitative value.

9. An object classification method for classifying an object in an image, wherein
a device determines an object region of an entire object in the image,
the device generates information per unit of the object region based on the object region,
the device extracts an object region unit feature value from the information per unit of the object region,
the device extracts a partial region unit feature value from each of one or more partial regions in the object region, and
the device classifies the object based on the object region unit feature value and the partial region unit feature value.

10. The object classification method according to claim 9, wherein
the information per unit of the object region is formed as a fixed-sized one-dimensional or two-dimensional signal indicating a feature of the object region.

11. The object classification method according to claim 10, wherein
the device is configured to set a point in the object region, and to generate the information per unit of the object region by a polar coordinate form having the point as an original point.

12. The object classification method according to claim 9, wherein
the device generates the information per unit of the object region based on information of the object region and a pixel of the image.

13. The object classification method according to claim 11, wherein
the device determines a starting point of a deflection angle when generating the information per unit of the object region by the polar coordinate form based on a shape of the object region.

14. The object classification method according to claim 9, wherein
the device analyzes the object region unit feature value and/or the partial region unit feature value, and a classification result of the object, determines an evaluation value of the information per unit of the object region and/or the partial region unit feature value with respect to the classification result, and displays the evaluation value for a user.

15. The object classification method according to claim 9, wherein
the device
determines a classification result per unit of the partial region based on the object region unit feature value and the partial region unit feature values of a plurality of the partial regions, and
classifies the object based on the classification result per unit of the partial region.
